# EUROPÄISCHE PATENTSCHRIFT

(11) **EP 3 442 759 B1**
(45) Veröffentlichungstag und Bekanntmachung des Hinweises auf die Patenterteilung: **22.04.2020**
(21) Anmeldenummer: 17739467.3
(22) Anmeldetag: 09.06.2017
(51) Int. Cl.: B27K 3/02, B27K 3/10

(54) **HOLZBEHANDLUNGSVORRICHTUNG ZUR DRUCKLOSEN BEHANDLUNG VON HOLZ UND DRUCKLOSES VERFAHREN ZUR HOLZBEHANDLUNG**
WOOD TREATMENT DEVICE FOR THE PRESSURE-FREE TREATMENT OF WOOD AND OF A PRESSURE-FREE METHOD FOR TREATING WOOD
DISPOSITIF DE TRAITEMENT DU BOIS POUR LE TRAITEMENT SANS PRESSION DU BOIS ET PROCÉDÉ DE TRAITEMENT DU BOIS SANS PRESSION

(30) Priorität: 10.06.2016 DE 102016007093
(43) Veröffentlichungstag der Anmeldung: 20.02.2019
(73) Patentinhaber: IML-Instrumenta Mechanik Labor GmbH, 69168 Wiesloch (DE)
(72) Erfinder: HUNGER, Erich, 76133 Karlsruhe (DE); HUNGER, Sebastian, 69181 Leimen (DE); HUNGER, Fabian, 69181 Leimen (DE)
(74) Vertreter: Mehl-Mikus, Claudia
(86) Internationale Anmeldenummer: PCT/EP2017/000673
(87) Internationale Veröffentlichungsnummer: WO 2017/211459

(56) Entgegenhaltungen:
- DE-A1- 2 254 242
- FR-A1- 2 259 534
- FR-A1- 2 260 430
- SE-B- 356 921
- US-A- 1 999 458

## Beschreibung

Die Erfindung betrifft eine Holzbehandlungsvorrichtung zur Behandlung von Holz und ein Verfahren zur Behandlung des Holzes.

Aus dem Stand der Technik ist bekannt, dass Holzmasten, Baumstämme und andere Holzobjekte von Zeit zu Zeit einer Prüfung unterzogen werden, bei der der Zustand des vorhandenen Holzes, dessen Imprägnierung und/oder weitere für die Standfestigkeit und Tragfähigkeit maßgebliche Eigenschaften untersucht werden. Dabei ist die Untersuchung auf Fäule im Inneren eine wichtige Untersuchung hinsichtlich der Standfestigkeit. Weitere Untersuchungen werden mittels Bohrwiderstandsmessungen durchgeführt.

Aus der DE 10 2014 015 051 B3 ist ein Holzprüfwerkzeug und ein Verfahren bekannt, dass eine Untersuchung der Tränktiefe von imprägniertem Holz ermöglicht, indem das Holzprüfwerkzeug in das Holz eingetrieben und damit eine Holzprobe ausgestanzt wird, die einer Sichtprüfung unterzogen werden kann.

Durch derartige Untersuchungen wird ermittelt, in wieweit das Holz geschädigt ist und ob das verbleibende gesunde Holz für die Standfestigkeit ausreichend ist. Sobald das Holz zu stark geschädigt ist, so muss der Mast ersetzt oder der Baum gefällt werden. Eine Behandlung des Holzes ist bisher kaum möglich.

Weiter ist aus dem Stand der Technik bekannt, dass zur Tiefenbehandlung von Holz mittels einer Vorrichtung Imprägnierflüssigkeit unter hohem Druck in das Holz geleitet wird. Eine solche Vorrichtung ist beispielsweise aus der DE 2 021 647 U bekannt. Diese Imprägnierung ist vorbeugend durchzuführen und durch die Notwendigkeit von hohen Drücken sehr aufwändig.

Darüber hinaus sind Fungizide bekannt, die selbst Pilze enthalten, und zur Bekämpfung von Fäulnis bei befallenem Holz oder zur Vorbeugung eingesetzt werden. Ein solches Fungizid ist beispielsweise aus WO 93/08694 bekannt. In FR2260430A1 wird ein nagelförmiger Hohlkörper ins Holz eingebracht. Dann wird durch Aufschrauben eines Deckels Lösungsmittel eingebracht und das zunächst als Feststoff vorliegende Holzschutzmittel durchtränkt und durch die seitlichen Öffnungen des Zylinders gespült. In FR2259534A1 wird im Innenraum des Hohlnagels eine mit Holzschutzmittel gefüllte Plastikblase durch Druck zum Platzen gebracht. In DE2254242 A1 wird das Verschlussmaterial der Löcher durch den Baumsaft aufgelöst. US1999458A beschreibt einen filmartigen Überzug, der durch Reibung entfernt wird. In SE356921B werden mehrere Ampullen innerhalb eines Hohlnagels durchstochen, um die Holzbehandlungssubstanz freizusetzen.

Ausgehend von diesem Stand der Technik ist es Aufgabe der vorliegenden Erfindung, eine Vorrichtung bereitzustellen, mit der eine Behandlung von Holz, in dem Fäulnis erkannt wurde, auf einfache Weise ermöglicht wird.

Diese Aufgabe wird durch eine Holzbehandlungsvorrichtung mit den Merkmalen des Anspruchs 1 gelöst.

Die weitere Aufgabe, ein Verfahren zur Behandlung von mit Fäulnis befallenem Holz, wird durch das Verfahren mit den Merkmalen des unabhängigen Anspruchs 11 gelöst.

Weiterbildungen sind in den Unteransprüchen ausgeführt.

Eine erste Ausführungsform bezieht sich auf eine Holzbehandlungsvorrichtung, die dafür ausgebildet ist, Holz zu behandeln. Dabei ist die Behandlung von Holz in Form von Holzmasten oder anderen Holzobjekten, aber auch die Behandlung von lebendem Holz an Baumstämmen oder Ästen gemeint.

Die Holzbehandlungsvorrichtung weist einen zylindrischen Hohlkörper mit einem Innenende, einem Außenende, zumindest einer Austrittsöffnung sowie einen Schubstift und einen Aufnahmeraum auf. Der Aufnahmeraum ist zur Aufnahme von einem Trägermaterial mit Holzbehandlungswirkstoff ausgebildet ist. Das Innenende des zylindrischen Hohlkörpers ist dazu ausgebildet, bei der Anwendung innerhalb des Holzes zu liegen und das Außenende liegt an dem dem Innenende abgewandten Ende des zylindrischen Hohlkörpers. Der Schubstift, der sich entlang der Längsachse des zylindrischen Hohlkörpers erstreckt, ist von außerhalb des zylindrischen Hohlkörpers von der Außenseite her verschiebbar und weist zumindest einen Verschlussabschnitt auf, der in einem Nichtanwendungszustand die zumindest eine Austrittsöffnung verschließt und in einem Anwendungszustand der Holzbehandlungsvorrichtung nach dem Verschieben die zumindest eine Austrittsöffnung freigibt, die dazu ausgebildet ist, in oder nahe den zu behandelnden Stellen zu liegen zu kommen, und den Aufnahmeraum mit dem Holz in Kontakt bringt. Die Austrittsöffnung kann am Innenende des zylindrischen Hohlköpers, an der Stirnseite, liegen, und alternativ können Austrittsöffnung(en) auch ausschließlich an der Mantelfläche des zylindrischen Hohlkörpers vorliegen. Es ist auch möglich, dass sowohl an der Stirnseite als auch an der Mantelfläche Austrittsöffnungen vorliegen.

Unter Verschieben kann dabei eine Bewegung des Schubstiftes entlang der Längsachse oder auch eine Drehung um diese Achse oder eine gemischte Dreh-Schub-Bewegung verstanden werden.

Die Holzbehandlungsvorrichtung wird zur Anwendung in das Holz eingeschoben oder eingeschlagen, so dass die Austrittsöffnungen in oder nahe an den zu behandelnden Stellen liegen. Anschließend wird der Schubstift verschoben und damit die Austrittsöffnung(en) frei gegeben. Das Verschieben des Schubstiftes kann durch ein Eindrücken in den zylindrischen Hohlkörper mit einem Finger oder einem Durchschlag, aber auch durch ein nach außen ragendes Ende des Schubstiftes erfolgen. Der Aufnahmeraum wird so mit dem umliegenden Holz verbunden. Das Trägermaterial kann mit dem Schubstift mit verschoben werden, so dass es teilweise in die Austrittsöffnungen geschoben wird oder der Aufnahmeraum wird durch das Verschieben des Schubstiftes vergrößert, so dass sich das Trägermaterial in dem vergrößerten Aufnahmeraum verteilt. Mit oder ohne direkten Kontakt des Trägermaterials mit dem Holz kann sich der Holzbehandlungswirkstoff vom Trägermaterial aus ausbreiten und auf das Holz übergehen. Die Holzbehandlungsvorrichtung verbleibt in dem Holz, so dass sich der Holzbehandlungswirkstoff über einen längeren Zeitraum ausbreiten kann und nicht durch hohen Druck in die gewünschten Bereiche gepresst werden muss.

Das heißt insbesondere, dass der Schubstift lediglich dazu dient, gezielt die eine oder mehrere Austrittsöffnung(en) zu öffnen oder frei zu geben und es heißt weiter, dass die Vorrichtung so ausgestaltet ist, dass eine in dem Aufnahmeraum befindliche Substanz lediglich durch frei Geben der Öffnungen in das Holz übertritt. Dabei ist "übertreten" als druckloses Übergehen zu verstehen, also ohne Druck, wie er ausgeübt wird bei einem Kolben-Zylinder-System einer Spritze oder ähnlichem. Der erfindungsgemäße Schubstift ist kein Kolben und wirkt auch nicht als solcher; andere Druckmittel werden ebenfalls nicht eingesetzt. Entsprechend benötigt die erfindungsgemäße Vorrichtung auch keine Düse oder ähnliche Hilfsmittel zur druckabhängigen Ausbringung der Holzbehandlungssubstanz. Im Unterschied zum Eindrücken eines Kolbens in einen Zylinder wie bei einer Spritze, was hierin unter "hohem Druck" verstanden wird und was je nach Kraftaufwand mit "sehr hohem Druck" geleistet werden kann, wird hierin der Schubstift als "quasi drucklos" betätigbar verstanden, das Eindrehen dient lediglich dem frei Geben der Öffnungen. Ein Eindrücken oder Pressen der Holzbehandlungssubstanz ist nicht gewünscht, weil die Struktur des Holzes nicht durch Druck beeinflusst, besonders nicht negativ beeinflusst werden soll.

Es kann sich bei der Holzbehandlung um eine vorbeugende Behandlung handeln, aber auch um eine Behandlung geschädigter Bereiche, beispielsweise Bereiche mit Fäule, die durch Pilze verursacht wird. Soll eine mit Pilzen befallene Stelle behandelt werden, so ist es möglich, einen Antagonisten einzusetzen. Das bedeutet, dass ein anderer Holzpilz eingesetzt wird, der das Holz nicht schädigt, aber so dominant ist, dass er den schädlichen Pilz verdrängt. Dieser Antagonist breitet sich wie der schädliche Pilz im Holz aus, dabei vergehen nicht nur Tage, sondern Wochen und Monate. Wichtig ist dabei nur, dass der Antagonist sich schneller als der schädliche Pilz ausbreitet, damit der schädliche Pilz verdrängt wird, bevor die Schädigung des Holzes zu groß wird.

Dieser Antagonist, oder ein anderes Holzbehandlungsmittel, wird von einem Trägermaterial aufgenommen. Dabei kann das Trägermaterial ein Feststoff sein und den Wirkstoff absorbieren oder auch in flüssigem Zustand vorliegen, wobei der Wirkstoff in dieses Liquid eingetragen ist. Das Trägermaterial wird in den Aufnahmeraum gegeben und der Aufnahmeraum mit dem Schubstift verschlossen.

In einer Ausführungsform liegt die Holzbearbeitungsvorrichtung mit bereits mit Trägermaterial und Holzbehandlungswirkstoff befülltem Aufnahmeraum vor, so dass diese direkt zur Anwendung eingesetzt werden kann. Denkbar sind Holzbearbeitungsvorrichtungen, die für unterschiedliche Anwendungen, vorbeugend oder gegen einen Befall, eingesetzt werden können, die mit unterschiedlichen Wirkstoffen versehen sind. Dabei sind sehr spezielle Wirkstoffe genauso wie breitflächig einsetzbare Wirkstoffe, biologische oder chemische Produkte und Trägermaterialien möglich. Der Holzbehandlungswirkstoff entfalten beispielsweise, wenn er einen Antagonisten enthält, seine Wirkung über längere Zeit - so meint daher auch "Langzeit-Behandlung" auch die längere Zeit, die es benötigt, damit eine Pilzkolonie wie die eines Antagonisten gegen einen Schadpilz aufwachsen kann. "Langzeit" ist damit ein relativer Begriff, der zumindest mehrere Tage, je nach Umgebungsbedingungen wie Witterung, Schadpilzbefall, Verteilung des Schadpilzes/Ausbreitung etc. durchaus mehrere Wochen oder Monate bedeuten kann.

"Im Holz verbleiben" der Vorrichtung bezieht sich also darauf, dass diese durchaus über Wochen und Monate oder gar dauerhaft am Ort der Behandlung im Holz bleiben kann.

In weiteren Ausführungsformen der Holzbehandlungsvorrichtung kann die am Innenende des zylindrischen Hohlköpers liegende Stirnseite, die eine Austrittsöffnung bildet, im Nichtanwendungszustand durch eine Einschlagspitze verschlossen sein, die am Innenende des Schubstiftes vorliegt. Die Einschlagspitze ist in dieser Variante einer der Verschlussabschnitte. Nach einem Verschieben des Schubstiftes wird ein ringförmiger Spalt freigegeben, durch den der Aufnahmeraum mit dem Holz in Kontakt kommt. Die Einschlagspitze erleichtert dabei das Einschlagen oder Einschieben der Holzbearbeitungsvorrichtung, indem sie störendes Holz verdrängt.

In der Ausführungsform, in der die am Innenende des zylindrischen Hohlköpers liegende Stirnseite verschlossen ist, so dass die Austrittsöffnung(en) ausschließlich an der Mantelfläche des zylindrischen Hohlkörpers vorliegen, ist es möglich, den Schubstift derart zu gestalten, dass dieser aus dem zylindrischen Hohlkörper entnommen, erneut mit Trägermaterial mit Holzbehandlungswirkstoff befüllt und wieder in den zylindrischen Hohlkörper eingesetzt werden kann.

Die nun verschlossene Stirnseite des zylindrischen Hohlkörpers kann dabei in unterschiedlichen Formen ausgestaltet sein. In einer Variante bildet die Stirnseite eine Einschlagspitze aus.

Die auf der Mantelfläche liegenden Austrittsöffnungen des zylindrischen Hohlkörpers können verschiedene Formen aufweisen. Es können beispielsweise in den zylindrischen Hohlkörper gebohrte Löcher oder Langlöcher, aber auch Schlitze in Längs- oder Querrichtung sein. Denkbar sind auch schraubenförmig entlang der Mantelfläche gewundene Schlitze oder polygone Ausschnitte. Die Anzahl und Anordnung dieser Austrittsöffnungen kann unterschiedlich gewählt sein. So sind beispielsweise eine oder mehrere Reihen von Austrittsöffnungen, aber auch zufällig und/oder ungleich verteilte Austrittsöffnungen möglich.

Der Schubstift weist zu der Anzahl und Anordnung der Austrittsöffnungen passende Verschlussabschnitte auf, mit denen die Auftrittsöffnungen im Nichtanwendungszustand verschlossen werden können. So können sich die Verschlussabschnitte radial von einer Mittelachse oder einem zentralen Zylinder nach außen erstrecken. Diese radial liegenden Prismen haben als Grundfläche die Form der Austrittsöffnungen oder eine Grundfläche, die darüber hinausragt, so dass die Austrittsöffnungen vollständig verdeckt werden können. Wird der Schubstift im Anwendungszustand verschoben, so werden diese Verschlussabschnitte von den Austrittsöffnungen gerückt, so dass die Austrittsöffnungen freigegeben werden.

Die Verschlussabschnitte können aber auch großflächiger ausgebildet sein, so dass ein Verschlussabschnitt mehrere Austrittsöffnungen verschließt. So kann ein scheibenförmiger Verschlussabschnitt alle auf eine Umfangslinie liegenden Austrittsöffnungen gleichzeitig verschließen und durch ein Verschieben in axialer Richtung auch freigeben.

Die Verschlussabschnitte, aber auch die übrigen Teile des Schubstiftes können entweder so ausgeformt sein, dass ein einziger Aufnahmeraum innerhalb des zylindrischen Hohlkörpers vorliegt, dem eine oder mehrere Austrittsöffnungen zugeordnet sind oder den Raum so unterteilen, dass mehrere kleinere Aufnahmeräume vorliegen, denen jeweils mindestens eine Austrittsöffnung zugeordnet ist. Denkbar ist auch eine Teilung in mehrere in axialer Richtung hintereinander angeordnete Aufnahmeräume, die jeweils durch die gleichen Austrittsöffnungen in Kontakt mit dem Holz gebracht werden, indem der Schubstift Stück für Stück verschoben wird. Je nach Ausführungsform der Vorrichtung können über die Dauer der Behandlung zunehmend Aufnahmeräume "zugeschaltet" werden, indem die entsprechenden Ausstrittsöffnungen, die dem Aufnahmeraum zugeordnet sind, frei gegeben bzw. geöffnet werden. Durch das längerzeitige Verbleiben der Vorrichtung im Holz kann so eine Behandlung über längere Zeiträume, die Tage, Wochen oder aber auch Monate betragen kann, durchgeführt werden.

Das Außenende des zylindrischen Hohlkörpers weist einen Kopf auf. Dieser Kopf kann ein abgeflachter Einschlagkopf sein, so dass die Holzbearbeitungsvorrichtung beispielsweise mit einem Hammer in das Holz eingetrieben werden kann. Dies ist bei massivem Holz vorteilhaft, da sonst der zylindrische Hohlkörper durch das Aufschlagen mit dem Hammer verformt werden kann und dies wiederum dazu führen kann, dass der Schubstift nicht mehr verschiebbar ist. Der Kopf kann jedoch auch als eine Art Griff ausgebildet sein, der ein Greifen der Holzbehandlungsvorrichtung mit den Fingern ermöglicht. So sind knaufartige oder kugelförmige Griffe möglich.

Die Holzbehandlungsvorrichtung ist in einer Ausführungsform derart ausgebildet, dass sie das Loch, in das sie zur Holzbehandlung eingesteckt wurde oder das durch das Einschlagen entstanden ist, wasserundurchlässig verschließt. So kann das Eindringen weiterer Feuchtigkeit, die das Ausbreiten von Fäule begünstigt, verhindert werden.

Die Holzbehandlungsvorrichtung kann an der Außenseite der Mantelfläche des zylindrischen Hohlkörpers auch Verankerungen aufweisen, die die Holzbehandlungsvorrichtung im Anwendungszustand festhalten. Diese Verankerungen können widerhakenartig ausgebildet sein, so dass sie ein Einschieben bzw. Einschlagen erlauben, nicht jedoch ein Herausziehen bzw. ein Herausrutschen der Holzbehandlungsvorrichtung. Mit den Verankerungen bildet der zylindrische Hohlkörper eine Art Dübel, der in einem Loch verankert wird. Vorteilhaft ist dies gerade auch dann, wenn die Vorrichtung gar nicht mehr aus dem Holz genommen werden soll.

Die Holzbehandlungsvorrichtung kann aus unterschiedlichen Materialien hergestellt werden. In einer Ausführungsform bestehen der zylindrische Hohlkörper aus Aluminium und der Schubstift aus Messing. Es sind aber auch andere, vorteilhaft härtere Materialien möglich, mit denen eine höhere Festigkeit beim Einschlagen in massives Holz erreicht wird. Zur Holzbehandlung von lebendem Holz an Baumstämmen oder Ästen, können beide Teile aus Edelstahl hergestellt werden, so dass eine Korrosion oder ein Übergang von Bestandteilen in das Holz ausgeschlossen werden kann. Wenn bei Vorliegen eines Loches, in das die Holzbehandlungsvorrichtung aufgenommen werden soll, die Härte nicht entscheidend ist, so sind auch Varianten aus Holz oder Kunststoff denkbar.

Ein erfindungsgemäßes Verfahren zur Behandlung von Holz, erfolgt unter Einsatz einer erfindungsgemäßen Holzbehandlungsvorrichtung. Das Verfahren umfasst folgende Schritte:
a) Bereitstellen der Holzbehandlungsvorrichtung,
b) Einbringen des entsprechenden Holzbehandlungswirkstoffs auf das Trägermaterial der Holzbehandlungsvorrichtung und Einbringen des Trägermaterials mit dem Holzbehandlungswirkstoffs in den Aufnahmeraum der Holzbehandlungsvorrichtung,
c) Eintreiben des Holzbehandlungsvorrichtung in das Holz,
d) Verschieben des Schubstifts, dadurch Öffnen der Austrittsöffnungen und in Kontaktbringen des Aufnahmeraums mit dem Holz, dadurch Auslassen des Holzbehandlungswirkstoffs,
e) Zurücklassen der Holzbehandlungsvorrichtung.

In einem weiteren erfindungsgemäßen Verfahren wird in Schritt c) die Holzbehandlungsvorrichtung in ein im Holz vorhandenes Loch eingetrieben. Dabei kann dieses Loch durch eine Entnahme einer Holzprobe, durch eine Bohrwiderstandmessung oder eine ähnliche Holzprüfung entstanden der speziell für die Behandlung gebohrt worden sein. Das Loch kann schon längere Zeit in dem Holz sein oder erst kurz vor dem Einbringen der Holzbearbeitungsvorrichtung entstanden sein.

In einer Weiterentwicklung des Verfahrens werden vor Schritt a) folgende Schritte durchgeführt:
a') Entnehmen einer Holzprobe des Holzes zur Untersuchung auf Fäulnis,
a") Untersuchung der Holzprobe auf verursachende Pilzart,
a'") Auswählen geeigneter Holzbehandlungswirksoffe.

Weiter kann das Verfahren das Einbringen des ausgewählten Holzbehandlungswirkstoffs beinhalten. Es ist dabei nicht ausschlaggebend, ob die Entnahme und Untersuchung der Holzprobe zeitlich beabstandet von der Holzbehandlung vorgenommen wird oder unmittelbar vorher.

Bei der Holzbehandlung muss die Holzbehandlungsvorrichtung nicht vollständig in das Holz eingeschoben oder geschlagen werden. Es ist vielmehr sinnvoll, dass die Holzbehandlungsvorrichtung nur bis zu einer vorbestimmten Tiefe in das Holz eingetrieben wird, so dass die Austrittsöffnungen so platziert sind, dass das Trägermaterial und damit der Holzbehandlungswirkstoff gezielt in und neben der befallenen Stelle bzw. der vorbeugend zu behandelnden Stelle abgegeben wird.

Weitere Ausführungsformen sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Gegenstände oder Teile derselben, die im Wesentlichen gleich oder ähnlich sind, können mit denselben Bezugszeichen versehen sein. Die Figuren sind lediglich eine schematische Darstellung einer Ausführungsform der Erfindung.

Dabei zeigen:
- **Fig. 1**: eine Seitenansicht einer Holzbehandlungsvorrichtung,
- **Fig. 2**: einen Längsschnitt durch eine Holzbearbeitungsvorrichtung in Nichtanwendungsanordnung,
- **Fig. 3**: einen Längsschnitt durch eine Holzbearbeitungsvorrichtung in Anwendungsanordnung mit eingeschobenem Schubstift,
- **Fig. 4**: einen Längsschnitt durch eine Holzbearbeitungsvorrichtung ohne stirnseitige Austrittsöffnung,
- **Fig. 5**: eine perspektivische Detailansicht einer Holzbehandlungsvorrichtung mit eingeschobenem Schubstift,
- **Fig. 6**: eine perspektivische Detailansicht einer Holzbehandlungsvorrichtung in Nichtanwendungsanordnung,
- **Fig. 7**: einen Längsschnitt durch ein imprägniertes Holzstück mit Fäulnis.

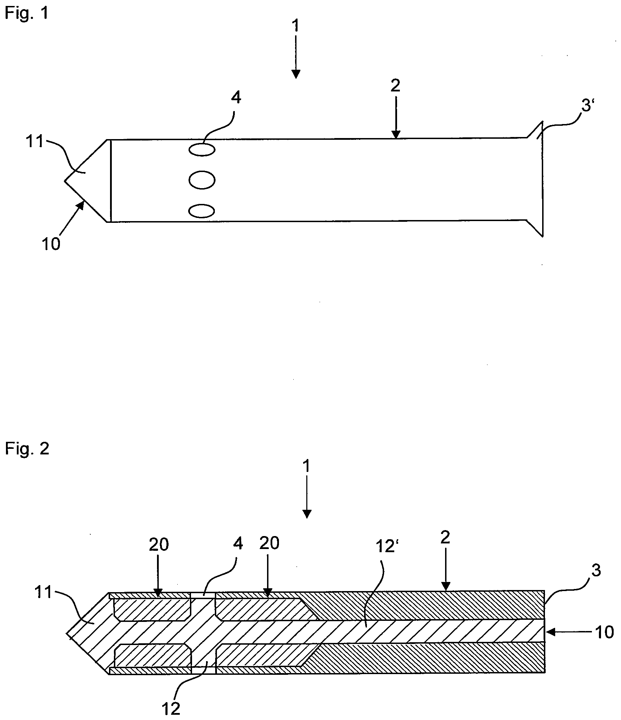

Die erfindungsgemäße Vorrichtung bezieht sich auf eine Holzbehandlungsvorrichtung 1 wie sie in **Fig. 2** gezeigt ist. Diese Holzbehandlungsvorrichtung 1 ist aus einem zylindrischen Hohlkörper 2 und einem Schubstift 10 zusammengesetzt. Dabei wird zumindest ein Aufnahmeraum 20' gebildet, der Trägermaterial 20 mit einem Holzbehandlungswirkstoff aufnehmen kann. Dabei sind Ausführungsformen möglich, bei denen das Trägermaterial 20 mit dem Holzbehandlungswirkstoff noch in den Aufnahmeraum/die Aufnahmeräume 20' einzubringen ist, aber auch fertig befüllte Holzbehandlungsvorrichtungen 1 für unterschiedliche Anwendungen mit unterschiedlichen Holzbehandlungswirkstoffen, die für die jeweilige Anwendung ausgewählt werden. Der zylindrische Hohlkörper 2 hat ein Innenende, das bei der Anwendung innerhalb des Holzes liegt und ein davon abgewandtes Außenende sowie zumindest eine Auftrittsöffnung 4. Diese zumindest eine Austrittsöffnung 4 wird im Nichtanwendungszustand von zumindest einem Verschlussabschnitt 12 des Schubstiftes 10 verschlossen und kann im Anwendungszustand durch Verschieben des Schubstiftes 10 und damit des Verschlussabschnitts 12 freigegeben werden. Der Schubstift 10 erstreckt sich entlang der Längsachse des zylindrischen Hohlkörpers 2 und ist von außerhalb des zylindrischen Hohlkörpers 2 verschiebbar.

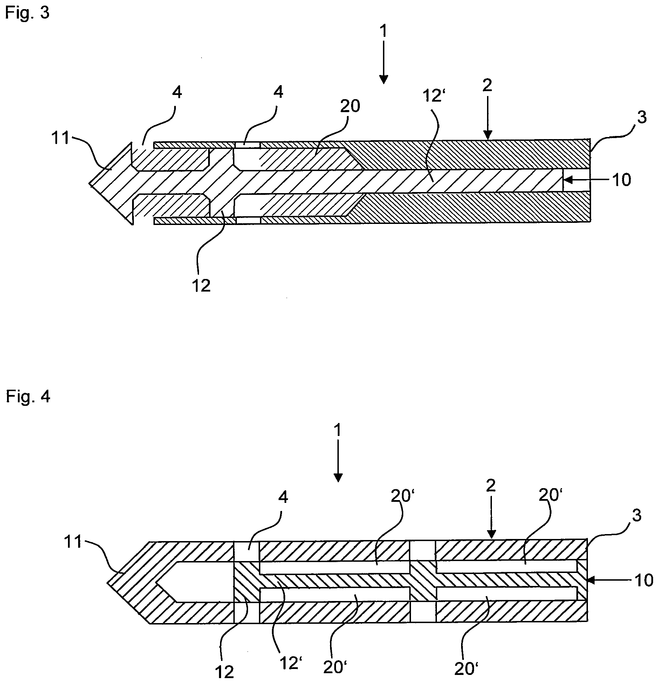

**Fig. 3** zeigt die Holzbearbeitungsvorrichtung 1 aus **Fig. 2** mit verschobenem Schubstift 10. In der dargestellten Ausführungsform hat der zylindrische Hohlkörper 2 eine Austrittsöffnung 4 an seiner am Innenende liegenden Stirnseite und mehrere Austrittsöffnungen 4 auf seiner Mantelfläche, die auf einer Umfangslinie verteilt sind. Diese Austrittsöffnungen 4 werden jeweils von den Verschlussabschnitten 12 des Schubstiftes 10 verschlossen bzw. freigegeben. Wie in der Abbildung nicht zu unterscheiden ist, kann dabei ein Verschlussabschnitt 12 mehrere Austrittsöffnungen 4, in **Fig. 2** und **Fig. 3** alle auf der Mantellinie des zylindrischen Hohlkörpers 2 liegenden Austrittsöffnungen 4, verschließen, wobei der Verschlussabschnitt 12 eine scheibenförmige Gestalt hat, die sich von einem zentralen Zylinder des Schubstiftes 10 radial nach außen erstreckt, oder es verschließen mehrere Verschlussabschnitte 12 jeweils eine Austrittsöffnung 4, wobei die Verschlussabschnitte 12 eine prismatische Form mit der Form der jeweiligen Austrittsöffnung 4 als Grundfläche aufweisen und sich ebenfalls radial vom zentralen Zylinder des Schubstiftes 10 zum zylindrischen Hohlkörper 2 nach außen erstrecken. Nicht dargestellt sind andere Varianten der Verschlussabschnitte 12, bei denen eine andere Form gewählt wird, so dass jeweils eine oder mehrere Austrittsöffnungen 4 verschlossen werden. So sind ringförmige Ausführungen möglich oder solche, bei denen der Schubstift 10 kein zentrales Element aufweist, sondern die Verschlussabschnitte 12 durch Streben oder einen käfigartigen Aufbau verbindet.

Auch die stirnseitige Austrittsöffnung 4 wird durch einen Verschlussabschnitt 12 verschlossen bzw. freigegeben. Dieser Verschlussabschnitt 12 ist in der dargestellten Ausführung als Einschlagspitze 11 ausgeführt. So ist die Einschlagspitze 11 Teil des Schubstiftes 10. Durch Verschieben des Schubstiftes 10 wird die Einschlagspitze 11 von dem zylindrischen Hohlkörper 2 abgehoben und der dahinter liegende Aufnahmeraum 20' geöffnet und im Anwendungszustand mit dem Holz in Kontakt gebracht. Die Einschlagspitze 11 erleichtert das Einbringen der Holzbehandlungsvorrichtung 1 in das Holz. So ist es auch möglich die Holzbehandlungsvorrichtung 1 in massives Holz einzuschlagen, ähnlich wie ein Nagel eingeschlagen wird.

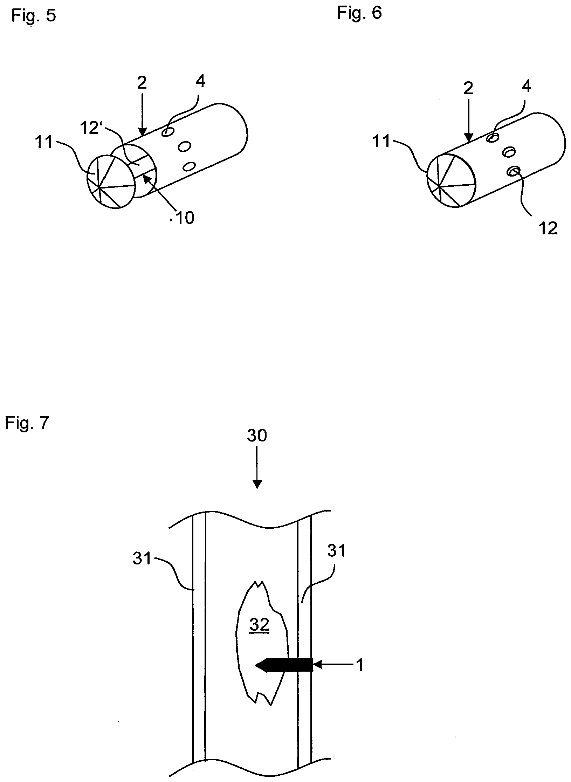

Diese Ausführungsform ist auch in den **Figuren 5 und 6** dargestellt. Dabei zeigt **Fig. 6** die Holzbehandlungsvorrichtung 1 in geschossenem Nichtanwendungszustand. Hier sind die Austrittsöffnungen 4 auf der Mantelfläche des zylindrischen Hohlkörpers 2 ebenso verschlossen wie die stirnseitige Austrittsöffnung 4. In **Fig. 5** ist der geöffnete Zustand dargestellt wie er innerhalb des Holzes im Anwendungszustand auftritt. Hier sind die stirnseitige Austrittsöffnung 4 und die Austrittsöffnungen 4 an der Mantelfläche freigegeben.

Die Austrittsöffnungen 4 können unterschiedliche Formen aufweisen. In **Fig. 2** und **Fig. 3** sind ovale Austrittsöffnungen 4 in der Mantelfläche des zylindrischen Hohlkörpers 2 dargestellt. Diese können jedoch auch runde, polygone, längliche oder andere herstellbare Formen aufweisen. So sind auch verschiedene Formen der Austrittsöffnungen 4 innerhalb einer Holzbehandlungsvorrichtung 1 möglich. Auch die Anzahl der Austrittsöffnungen 4 kann variieren, so kann nur eine einzige Austrittsöffnung 4 genauso vorliegen wie eine Vielzahl an Austrittsöffnungen 4, die in bestimmten Anordnungen wie eine oder mehrere Reihen oder spiralförmig, aber auch unregelmäßig verteilt sein können. Auch eine Variante mit ausschließlich einer stirnseitigen Austrittsöffnung 4 ist möglich.

**Fig. 4** zeigt eine Ausführungsform der Holzbehandlungsvorrichtung 1, bei der der zylindrische Hohlkörper 2 an seiner auf der Innenseite liegenden Stirnseite verschlossen ist, so dass hier keine Austrittsöffnung 4 vorliegt. Die Innenseite des zylindrischen Hohlkörpers 2 bildet die Einschlagspitze 11. So kann der Schubstift 10 in dem zylindrischen Hohlkörper 2 verschoben werden, ohne dass dieser weiter in das Holz getrieben werden muss. In der dargestellten Ausführungsform ist es sogar möglich, den Schubstift 10 aus dem zylindrischen Hohlkörper 2 zu entnehmen und gegebenenfalls das Trägermaterial 20 mit dem Holzbehandlungswirkstoff zu tauschen oder zu erneuern.

Nicht dargestellt sind weiterentwickelte Ausführungsformen, bei denen der Schubstift 10 in mehreren Schritten verschoben wird und dabei nach und nach weitere bzw. andere Austrittsöffnungen 4 freigibt und damit auch andere Aufnahmeräume 20' mit den Holz in Verbindung bringt. Dazu kann der Schubstift 10 unterschiedlichst gestaltet werden. So können die Verschlussabschnitte 12 so geformt sein, dass ein oder wenige große Aufnahmeräume 20' gebildet werden, die einer oder mehreren Austrittsöffnungen 4 zugeordnet sind oder es werden mehrere Aufnahmeräume 20' gebildet, die jeweils mindestens einer Auftrittsöffnung 4 zugeordnet sind. Auch kann der Schubstift 10 so gestaltet sein, dass er durch eine Drehbewegung um seine Längsachse verschoben wird. So können mehrere Aufnahmeräume 20' die sich entlang der Längsachse erstrecken durch längliche Austrittsöffnungen 4 mit dem Holz verbunden werden.

In **Fig. 1** ist eine Ausführungsform dargestellt, bei der das Außenende des zylindrischen Hohlkörpers 2 einen Kopf 3 aufweist, der als abgeflachter Einschlagkopf 3' ausgebildet ist. Dieser abgeflachte Einschlagkopf 3' bildet die Schlagfläche, wenn die Holzbehandlungsvorrichtung 1 in massives Holz oder ein kleineres Loch eingetrieben werden muss.

Der Kopf 3 kann unterschiedlich gestaltet sein. So kann anstelle des abgeflachten Einschlagkopfes 3' auch ein offenes Ende des zylindrischen Hohlkörpers 2 den Kopf bilden. Dabei kann das Außenende des zylindrischen Hohlkörpers 2 so gestaltet sein, dass ein einfaches Eindrücken des Schubstiftes 10 oder ein besserer Zugang zum Schubstift 10 gewährleistet wird. Eine ebenfalls nicht dargestellte Ausführungsform weist als Kopf 3 einen Griff auf, mit dem die Holzbearbeitungsvorrichtung 1 zwischen den Fingern gehalten werden kann, so dass diese einfacher in ein Loch im Holz eingebracht werden kann. Dieser Griff kann kugelförmig oder knaufartig ausgeführt oder sogar ergonomisch an die Form der Finger beim Greifen angepasst sein.

**Fig. 7** zeigt den Anwendungszustand der Holbehandlungsvorrichtung 1. Dabei ist die Holzbearbeitungsvorrichtung 1 in einen Holzmasten oder einen Stamm 30 eingebracht, der einen imprägnierten Bereich 31 und einen befallenen Bereich 32 aufweist. Dabei wird die Holzbehandlungsvorrichtung 1 so in das Holz eingebracht, dass sie den befallenen Bereich 32 erreicht und die Austrittsöffnungen 4 in oder nahe diesem Bereich liegen und sich von dort der Holzbehandlungswirkstoff ausbereiten kann.

Dabei muss die Holzbehandlungsvorrichtung 1 nicht zwingend vollständig in das Holz eingeschlagen werden. Die Einschlagtiefe kann derart gewählt werden, dass die Austrittsöffnungen 4 in der gewünschten Position liegen. Die Holzbearbeitungsvorrichtung 1 kann so ausgestaltet sein, dass sie das Loch, in das sie eingesteckt wurde oder das durch das Eintreiben entstanden ist, wasserundurchlässig verschließt. So kann das Eindringen von Wasser verhindert werden.

Zur Verankerung bzw. Befestigung im Holz kann die Holzbehandlungsvorrichtung 1 Verankerungen aufweisen. Diese sind vorteilhaft an der Außenseite der Mantelfläche des zylindrischen Hohlkörpers 2 angeordnet und halten die Holzbearbeitungsvorrichtung 1 im Holz fest. Diese Verankerungen sind nicht in den Figuren dargestellt.

### BEZUGSZEICHENLISTE

- 1: Holzbehandlungsvorrichtung
- 2: Zylindrischer Hohlkörper
- 3: Kopf
- 3': Abgeflachter Einschlagkopf
- 4: Austrittsöffnung
- 10: Schubstift
- 11: Einschlagspitze
- 12: Verschlussabschnitt
- 20: Trägermaterial
- 20': Aufnahmeraum
- 30: Mast/Baumstamm
- 31: Imprägnierter Bereich
- 32: Befallener Bereich

## Patentansprüche

1. Holzbehandlungsvorrichtung (1), ausgebildet zur Langzeit-Behandlung von Holz, die
- einen zylindrischen Hohlkörper (2) mit einem Innenende, das bei der Anwendung innerhalb des Holzes zu liegen kommt, und
- ein von dem Innenende abgewandtes Außenende des zylindrischen Hohlkörpers und
- zumindest eine Austrittsöffnung (4) aufweist, die dazu ausgebildet ist, in oder nahe den zu behandelnden Stellen zu liegen zu kommen, wobei
- eine am Innenende des zylindrischen Hohlköpers (2) liegende, offene Stirnseite die Austrittsöffnung (4) bildet, und/oder
- der zylindrische Hohlköper (2) an seiner Mantelfläche zumindest eine Austrittsöffnung (4) aufweist, wobei der zylindrische Hohlkörper (2) einen Aufnahmeraum (20'), der zur Aufnahme eines Trägermaterials (20) mit Holzbehandlungswirkstoff ausgebildet ist, aufweist, und
- einen Schubstift (10), der sich entlang der Längsachse des zylindrischen Hohlkörpers (2) erstreckt, und der an dem Außenende von außerhalb des zylindrischen Hohlkörpers (2) verschiebbar ist,
wobei der Schubstift (10) zumindest einen Verschlussabschnitt (11,12) aufweist, der
- in einem Nichtanwendungszustand der Holzbehandlungsvorrichtung (1) die zumindest eine Austrittsöffnung (4) verschließt und
- in einem Anwendungszustand der Holzbehandlungsvorrichtung (1) nach Verschieben die zumindest eine Austrittsöffnung freigibt (4) und den Aufnahmeraum (20') mit dem Holz in Kontakt bringt.

2. Holzbehandlungsvorrichtung (1) nach Anspruch 1,
**dadurch gekennzeichnet, dass**
in dem Aufnahmeraum (20') das Trägermaterial (20) mit dem Holzbehandlungswirkstoff vorliegt, wobei bevorzugt der Holzbehandlungswirkstoff ein als Antagonist wirkender Holzpilz ist und wobei das Trägermaterial (20)
- ein Absorber ist, in dem der Antagonist absorbiert vorliegt, oder
- ein Liquid ist, in das der Antagonist eingetragen ist.

3. Holzbehandlungsvorrichtung (1) nach Anspruch 1 oder 2,
**dadurch gekennzeichnet, dass**
die am Innenende des zylindrischen Hohlköpers (2) liegende, offene Stirnseite die Austrittsöffnung (4) bildet, und der Verschlussabschnitt (11) durch eine an dem Innenende des Schubstiftes (11) vorliegende Einschlagspitze (11) gebildet wird, die in dem Nichtanwendungszustand die stirnseitige Austrittsöffnung (4) verschließt.

4. Holzbehandlungsvorrichtung (1) nach Anspruch 1 oder 2,
**dadurch gekennzeichnet, dass**
die am Innenende des zylindrischen Hohlköpers (2) liegende Stirnseite geschlossen ist, und wobei bevorzugt
die am Innenende des zylindrischen Hohlkörpers (2) liegende Stirnseite eine Einschlagspitze (11) aufweist.

5. Holzbehandlungsvorrichtung (1) nach einem der Ansprüche 1 bis 4,
**dadurch gekennzeichnet, dass**
die an der Mantelfläche vorliegende(n) Austrittsöffnung(en) (4) rund oder länglich ist/sind,
und/oder dass der zylindrische Hohlkörper (2) in seiner Mantelfläche mehrere Austrittsöffnungen (4) regelmäßig oder unregelmäßig über die Mantelfläche (4) angeordnet aufweist.

6. Holzbehandlungsvorrichtung (1) nach einem der Ansprüche 1 bis 5,
**dadurch gekennzeichnet, dass**
die Verschlussabschnitte (12) des Schubstifts (10) sich radial von einem zentralen Zylinder zum zylindrischen Hohlkörper (2) der Holzbehandlungsvorrichtung (1) erstrecken, wobei die Verschlussabschnitte (12) einzelne Stifte in prismatischer Form sind oder eine gemeinsame scheiben- oder ringförmige Form aufweisen.

7. Holzbehandlungsvorrichtung (1) nach einem der Ansprüche 1 bis 6,
**dadurch gekennzeichnet, dass**
der zylindrische Hohlkörper am Außenende einen Kopf (3) aufweist, wobei der Kopf (3) ein abgeflachter Einschlagkopf (3') oder ein Griff zum Greifen der Holzbehandlungsvorrichtung mit den Fingern ist, wobei bevorzugt der Griff ein knaufartiger Griff ist.

8. Holzbehandlungsvorrichtung (1) nach zumindest einem der Ansprüche 1 bis 7,
**dadurch gekennzeichnet, dass**
die Holzbehandlungsvorrichtung (1) dazu ausgebildet ist, im Anwendungszustand das Loch, in das die Holzbehandlungsvorrichtung (1) eingesteckt oder das durch das Einschlagen entstanden ist, wasserundurchlässig zu verschließen.

9. Holzbehandlungsvorrichtung (1) nach zumindest einem der Ansprüche 1 bis 8,
**dadurch gekennzeichnet, dass**
die Holzbehandlungsvorrichtung (1) an der Mantelfläche des zylindrischen Hohlkörpers (2) außenseitig Verankerungen aufweist, wobei die Verankerungen dazu ausgebildet sind, die Holzbehandlungsvorrichtung (1) im Anwendungszustand festzuhalten.

10. Holzbehandlungsvorrichtung (1) nach einem der Ansprüche 1 bis 9,
**dadurch gekennzeichnet, dass**
der zylindrische Hohlkörper (2) der Holzbehandlungsvorrichtung (1) aus Aluminium und der Schubstift (10) aus Messing oder beides aus Edelstahl hergestellt wird.

11. Verfahren zur Behandlung von Holz, wobei eine Holzbehandlungsvorrichtung (1) nach zumindest einem der Ansprüche 1 bis 10 eingesetzt wird,
**umfassend die Schritte,**
a) Bereitstellen der Holzbehandlungsvorrichtung (1),
b) Einbringen des entsprechenden Holzbehandlungswirkstoffs auf das Trägermaterial (20) der Holzbehandlungsvorrichtung (1) und Einbringen des Trägermaterials (20) mit dem Holzbehandlungswirkstoffs in den Aufnahmeraum (20') der Holzbehandlungsvorrichtung (1),
c) Eintreiben des Holzbehandlungsvorrichtung (1) in das Holz,
d) Verschieben des Schubstifts (10), dadurch Öffnen der Austrittsöffnungen (4) und in Kontaktbringen des Aufnahmeraums (20') mit dem Holz, dadurch Auslassen des Holzbehandlungswirkstoffs,
e) Zurücklassen der Holzbehandlungsvorrichtung (1).

12. Verfahren nach Anspruch 11, wobei in Schritt c) die Holzbehandlungsvorrichtung (1) in ein im Holz vorhandenes Loch eingetrieben wird.

13. Verfahren nach Anspruch 11 oder 12, wobei vor Schritt a) folgende Schritte durchgeführt werden:
a') Entnehmen einer Holzprobe des Holzes zur Untersuchung auf Fäulnis,
a") Untersuchung der Holzprobe auf verursachende Pilzart,
a'") Auswählen geeigneter Holzbehandlungswirksoffe.

14. Verfahren nach Anspruch 13, wobei Schritt b) das Einbringen des in Schritt a'") ausgewählten Holzbehandlungswirksoffs beinhaltet.

15. Verfahren nach einem der Ansprüche 11 bis 14, wobei in Schritt c) die Holzbehandlungsvorrichtung (1) nur bis zu einer vorbestimmten Tiefe in das Holz eingetrieben wird.

## Claims

1. Wood treatment device (1), embodied for long-term treatment of wood, comprising
- a cylindrical hollow body (2) with an inner end that during use is positioned inside the wood, and
- an outer end of the cylindrical hollow body which is facing away from the inner end, and
- at least one outlet opening (4), which is embodied to be placed at or near sites of wood to be tested, wherein
- the outlet opening (4) is formed by an open end face positioned at the inner end of the cylindrical hollow body (2) and/or
- the cylindrical hollow body (2) comprises at least one outlet opening (4) at its wall surface, wherein the cylindrical hollow body (2) comprises a receiving space (20') that is embodied for receiving a carrier material (20) with active agent for wood treatment,
and
- a thrust pin (10) which extends along the longitudinal axis of the cylindrical hollow body (2) and which is displaceable at the outer end from outside of the cylindrical hollow body (2),
wherein the thrust pin (10) comprises at least one closure section (11, 12) which
- closes off the at least one outlet opening (4) in a state of non-use of the wood treatment device (1), and
- in a state of use of the wood treatment device (1), after displacement, releases the at least one outlet opening (4) and brings the receiving space (20') into contact with the wood.

2. Wood treatment device (1) according to claim 1,
**characterized in that**
in the receiving space (20') the carrier material (20) with the active agent for wood treatment is present, wherein preferably the active agent for wood treatment is a wood fungus acting as an antagonist and wherein the carrier material (20) is
- an absorber in which the antagonist is present in absorbed state, or
- a liquid into which the antagonist is introduced.

3. Wood treatment device (1) according to claim 1 or 2,
**characterized in that**
the open end face positioned at the inner end of the cylindrical hollow body (2) forms the outlet opening (4), and the closure section (11) is formed by a drive-in tip (11) provided at the inner end of the thrust pin (11) which, in the state of non-use, closes off the end face outlet opening (4).

4. Wood treatment device (1) according to claim 1 or 2,
**characterized in that**
the end face positioned at the inner end of the cylindrical hollow body (2) is closed, and wherein preferably
the end face positioned at the inner end of the cylindrical hollow body (2) comprises a drive-in tip (11).

5. Wood treatment device (1) according to one of the claims 1 to 4,
**characterized in that**
the outlet opening(s) (4) provided at the wall surface is/are round or elongate, and/or **in that** the cylindrical hollow body (2) in its wall surface comprises several outlet openings (4) arranged regularly or irregularly across the wall surface (4).

6. Wood treatment device (1) according to one of the claims 1 to 5,
**characterized in that**
the closure sections (12) of the thrust pin (10) extend radially from a central cylinder to the cylindrical hollow body (2) of the wood treatment device (1), wherein the closure sections (12) are individual pins in prismatic shape or have a common disk-shaped or ring-shaped form.

7. Wood treatment device (1) according to one of the claims 1 to 6,
**characterized in that**
the cylindrical hollow body at the outer end comprises a head (3) wherein the head (3) is a flattened drive-in head (3') or a grip for gripping the wood treatment device with the fingers, wherein preferably the grip is a knob-like grip.

8. Wood treatment device (1) according to at least one of the claims 1 to 7,
**characterized in that**
the wood treatment device (1) is configured to close off water-tightly, in the state of use, the hole into which the wood treatment device (1) is inserted or which has been created by the driving-in action.

9. Wood treatment device (1) according to at least one of the claims 1 to 8,
**characterized in that**
the wood treatment device (1) at the wall surface of the cylindrical hollow body (2) comprises external anchoring means wherein the anchoring means are configured to secure the wood treatment device (1) in the state of use.

10. Wood treatment device (1) according to one of the claims 1 to 9,
**characterized in that**
the cylindrical hollow body (2) of the wood treatment device (1) is produced of aluminum and the thrust pin (10) of brass or both of stainless steel.

11. Method for treatment of wood, wherein a wood treatment device (1) according to at least one of the claims 1 to 10 is employed,
**comprising the steps of**
a) providing the wood treatment device (1);
b) applying the corresponding active agent for wood treatment to the carrier material (20) of the wood treatment device (1) and introducing the carrier material (20) with the active agent for wood treatment into the receiving space (20') of the wood treatment device (1);
c) driving the wood treatment device (1) into the wood;
d) displacing the thrust pin (10), thereby opening the outlet openings (4) and bringing into contact the receiving space (20') with the wood, thereby releasing the active agent for wood treatment;
e) leaving behind the wood treatment device (1).

12. Method according to claim 11, wherein in step c) the wood treatment device (1) is driven into a hole present in the wood.

13. Method according to claim 11 or 12, wherein, prior to step a), the following steps are performed:
a') removing a wood sample of the wood for examination in regard to decay;
a") examining the wood sample in regard to causative fungus type;
a'") selecting suitable active agents for wood treatment.

14. Method according to claim 13, wherein step b) comprises introducing the active agent for wood treatment selected in step a'").

15. Method according to one of the claims 11 to 14, wherein in step c) the wood treatment device (1) is driven into the wood only to a predetermined depth.

## Revendications

1. Dispositif de traitement de bois (1) réalisé pour le traitement à long terme de bois, qui présente
- un corps creux cylindrique (2) avec une extrémité interne qui vient en appui au sein du bois lors de l'utilisation, et
- une extrémité externe détournée de l'extrémité interne du corps creux cylindrique, et
- au moins une ouverture de sortie (4) qui est réalisée pour venir en appui dans ou à proximité des points à traiter, dans lequel
- un côté frontal ouvert situé à l'extrémité interne du corps creux cylindrique (2) forme l'ouverture de sortie (4), et/ou
- le corps creux cylindrique (2) présente au niveau de sa face d'enveloppe au moins une ouverture de sortie (4), dans lequel le corps creux cylindrique (2) présente un espace de réception (20') qui est réalisé pour la réception d'un matériau de support (20) avec une substance active de traitement de bois, et
- une cheville de poussée (10) qui s'étend le long de l'axe longitudinal du corps creux cylindrique (2) et qui peut être coulissée à l'extrémité externe de l'extérieur du corps creux cylindrique (2),
dans lequel la cheville de poussée (10) présente au moins une section de fermeture (11, 12) qui
- ferme l'au moins une ouverture de sortie (4) dans un état de non utilisation du dispositif de traitement de bois (1) et
- libère l'au moins une ouverture de sortie (4) dans un état d'utilisation du dispositif de traitement de bois (1) après coulissement et amène l'espace de réception (20') en contact avec le bois.

2. Dispositif de traitement de bois (1) selon la revendication 1,
**caractérisé en ce que**
le matériau de support (20) est présent dans l'espace de réception (20') avec la substance active de traitement de bois, dans lequel la substance active de traitement de bois est de préférence un champignon de bois agissant en tant qu'antagoniste et dans lequel le matériau de support (20)
- est un absorbeur dans lequel l'antagoniste est présent de manière absorbée, ou
- est un liquide dans lequel l'antagoniste est incorporé.

3. Dispositif de traitement de bois (1) selon la revendication 1 ou 2,
**caractérisé en ce que**
le côté frontal ouvert situé à l'extrémité interne du corps creux cylindrique (2) forme l'ouverture de sortie (4), et la section de fermeture (11) est formée par une pointe à enfoncer (11) présente à l'extrémité interne de la cheville de poussée (11) qui ferme l'ouverture de sortie frontale (4) dans l'état de non utilisation.

4. Dispositif de traitement de bois (1) selon la revendication 1 ou 2,
**caractérisé en ce que**
le côté frontal situé à l'extrémité interne du corps creux cylindrique (2) est fermé, et dans lequel de préférence
le côté frontal situé à l'extrémité interne du corps creux cylindrique (2) présente une pointe à enfoncer (11).

5. Dispositif de traitement de bois (1) selon une des revendications 1 à 4,
**caractérisé en ce que**
la/les ouverture(s) de sortie (4) présente(s) au niveau de la face d'enveloppe est/sont ronde(s) ou oblongue(s),
et/ou que le corps creux cylindrique (2) présente dans sa face d'enveloppe plusieurs ouvertures de sorite (4) disposées régulièrement ou irrégulièrement sur la face d'enveloppe (4).

6. Dispositif de traitement de bois (1) selon une des revendications 1 à 5,
**caractérisé en ce que**
les sections de fermeture (12) de la cheville de poussée (10) s'étendent radialement d'un cylindre central vers le corps creux cylindrique (2) du dispositif de traitement de bois (1), dans lequel les sections de fermeture (12) sont des chevilles individuelles sous forme prismatique ou présentent une forme de disque ou annulaire commune.

7. Dispositif de traitement de bois (1) selon une des revendications 1 à 6,
**caractérisé en ce que**
le corps creux cylindrique présente à l'extrémité externe une tête (3), dans lequel la tête (3) est une tête à enfoncer aplatie (3') ou une poignée pour la saisie du dispositif de traitement de bois avec les doigts, dans lequel la poignée est de préférence une poignée de type pommeau.

8. Dispositif de traitement de bois (1) selon au moins une des revendications 1 à 7,
**caractérisé en ce que**
le dispositif de traitement de bois (1) est réalisé pour fermer de manière imperméable à l'eau dans l'état d'utilisation le trou dans lequel le dispositif de traitement de bois (1) est inséré ou qui est apparu par l'enfoncement.

9. Dispositif de traitement de bois (1) selon au moins une des revendications 1 à 8,
**caractérisé en ce que**
le dispositif de traitement de bois (1) présente des ancrages au niveau de la face d'enveloppe du corps creux cylindrique (2) sur le côté externe, dans lequel les ancrages sont réalisés pour fixer le dispositif de traitement de bois (1) dans l'état d'utilisation.

10. Dispositif de traitement de bois (1) selon une des revendications 1 à 9,
**caractérisé en ce que**
le corps creux cylindrique (2) du dispositif de traitement de bois (1) est fabriqué en aluminium et la cheville de poussée (10) en laiton ou les deux en acier inoxydable.

11. Procédé de traitement de bois, dans lequel un dispositif de traitement de bois (1) selon au moins une des revendications 1 à 10 est utilisé,
**comprenant les étapes**
a) mise à disposition du dispositif de traitement de bois (1),
b) introduction de la substance active de traitement de bois correspondante sur le matériau de support (20) du dispositif de traitement de bois (1) et introduction du matériau de support (20) avec la substance active de traitement de bois dans l'espace de réception (20') du dispositif de traitement de bois (1),
c) enfoncement du dispositif de traitement de bois (1) dans le bois,
d) coulissement de la cheville de poussée (10), ouverture de ce fait des ouvertures de sortie (4) et mise en contact de l'espace de réception (20') avec le bois, évacuation de ce fait de la substance active de traitement de bois,
e) abandon du dispositif de traitement de bois (1).

12. Procédé selon la revendication 11, dans lequel le dispositif de traitement de bois (1) est enfoncé dans un trou présent dans le bois à l'étape c).

13. Procédé selon la revendication 11 ou 12, dans lequel les étapes suivantes sont réalisées avant l'étape a) :
a') prélèvement d'un échantillon de bois du bois pour l'examen à la recherche de putréfaction,
a") examen de l'échantillon de bois à la recherche du type de champignon en cause,
a'") sélection de substances actives de traitement de bois appropriées.

14. Procédé selon la revendication 13, dans lequel l'étape b) contient l'introduction de la substance active de traitement de bois sélectionnée à l'étape a'").

15. Procédé selon une des revendications 11 à 14, dans lequel à l'étape c), le dispositif de traitement de bois (1) n'est enfoncé dans le bois que jusqu'à une profondeur prédéterminée.
